(19) **Europäisches Patentamt European Patent Office Office européen des brevets**

(11) **EP 4 096 045 B1**

(12) **EUROPEAN PATENT SPECIFICATION**

(45) Date of publication and mention of the grant of the patent:
**29.10.2025 Bulletin 2025/44**

(21) Application number: **21926072.6**

(22) Date of filing: **26.09.2021**

(51) International Patent Classification (IPC):
**H02J 3/32** *(2006.01)*

(52) Cooperative Patent Classification (CPC):
**G06Q 10/20; Y02E 60/10**

(86) International application number:
**PCT/CN2021/120769**

(87) International publication number:
**WO 2022/183722 (09.09.2022 Gazette 2022/36)**

(54) **METHOD AND APPARATUS FOR ANALYZING RELIABILITY OF SUPER-LARGE SCALE BATTERY ENERGY STORAGE POWER STATION INFORMATION PHYSICAL SYSTEM**

VERFAHREN UND VORRICHTUNG ZUR ANALYSE DER ZUVERLÄSSIGKEIT EINES CYBER-PHYSIKALISCHEN SYSTEMS EINES BATTERIEENERGIESPEICHERKRAFTWERKS IN SEHR GROSSEM MASSSTAB

PROCÉDÉ ET APPAREIL D'ANALYSE DE FIABILITÉ D'UN SYSTÈME PHYSIQUE D'INFORMATION DE CENTRALE DE STOCKAGE D'ÉNERGIE PAR BATTERIES À TRÈS GRANDE ÉCHELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2021 CN 202110230263**

(43) Date of publication of application:
**30.11.2022 Bulletin 2022/48**

(73) Proprietors:
- **China Electric Power Research Institute Beijing 100192 (CN)**
- **Electric Power Research Institute of State Grid Liaoning Electric Power Co., Ltd. Shenyang, Liaoning 110006 (CN)**
- **State Grid Corporation of China (SGCC) Beijing 100031 (CN)**

(72) Inventors:
- **LI, Xiangjun Beijing 100192 (CN)**
- **GAO, Xiaxiang Beijing 100192 (CN)**
- **YANG, Xiyun Beijing 100192 (CN)**
- **SHENG, Xing Beijing 100192 (CN)**
- **JIA, Xuecui Beijing 100192 (CN)**
- **WANG, Shangxing Beijing 100192 (CN)**
- **DONG, Lizhi Beijing 100192 (CN)**
- **WANG, Kaifeng Beijing 100192 (CN)**
- **NIU, Meng Beijing 100192 (CN)**
- **YANG, Shuili Beijing 100192 (CN)**
- **HAN, Yue Liaoning 110006 (CN)**
- **DUAN, Fangwei Liaoning 110006 (CN)**

(74) Representative: **White, Andrew John et al Mathys & Squire The Shard 32 London Bridge Street London SE1 9SG (GB)**

(56) References cited:
**CN-A- 107 394 773    CN-A- 109 033 507
CN-A- 111 008 454    CN-A- 111 143 958
CN-A- 111 697 566    CN-A- 112 803 460
CN-B- 107 394 773    US-A1- 2018 218 277**

- LIU WENXIA ET AL: "Analytical Reliability Evaluation of Active Distribution Systems Considering Information Link Failures", IEEE TRANSACTIONS ON POWER SYSTEMS, IEEE, USA, vol. 35, no. 6, 19 May 2020 (2020-05-19), pages 4167 - 4179, XP011816802, ISSN: 0885-8950, [retrieved on 20201023], DOI: 10.1109/TPWRS.2020.2995180
- HEPING JIA, YI DING, YONGHUA SONG, YISHUANG HU, NAN SHANG, YUEQIN LIU: "Review of Reliability Analysis for Integrated Energy Systems With Integration of Cyber Physical Systems", POWER SYSTEM TECHNOLOGY, SHUILI-DIANLIBU DIANLI KEXUE YANJIUYUAN, BEIJING, CN, vol. 43, no. 1, 31 January 2019 (2019-01-31), CN
, pages 1 - 11, XP055965030, ISSN: 1000-3673, DOI: 10.13335/j.1000-3673.pst.2018.2135
- FENG  MINGCAN, XING JIE, FANG CHEN, WANG CHENGMIN, YI TAO, XIE NING: "The Reliability Evolution of Distribution Network Accessing the Storage Power Station", POWER SYSTEM AND CLEAN ENERGY, vol. 31, no. 6, 31 January 2015 (2015-01-31), pages 93 - 96 + 103, XP055965038, ISSN: 1674-3814

**Description**

**CROSS-REFERENCE TO RELATED APPLICATIONS**

The application is based on and claims benefit of priority to Chinese Patent Application No. 202110230263.1 filed on March 2, 2021.

**TECHNICAL FIRLD**

The application relates to the technical field of electrical engineering, and in particular to a method and apparatus for analyzing reliability of a cyber-physical system (CPS) of a very-large-scale (VLS) battery energy storage power station.

**BACKGROUND**

At present, battery energy storage power stations have been developing to megawatt-level and gigawatt-level VLS battery energy storage power stations. A gigawatt-level centralized VLS battery energy storage power station may play an active auxiliary role in consumption and absorption of large-scale renewable energy power, peak regulation and voltage regulation of a regional power grid, or the like. In case of diverse application scenarios, a VLS battery energy storage power station may need to meet requirements of different time scales and different processing precisions, such as emergency control, stabilizing fluctuation, or the like, at the same time. Therefore, the VLS battery energy storage power station relies on advanced communication technologies and monitoring systems to achieve diverse functions. In a VLS energy storage system, topology of communication and monitoring systems thereof will become larger and more complex. When a communication and monitoring device fails randomly, it may be difficult for a control center to obtain and process data, which greatly reduces operation efficiency thereof, and may even cause the danger of power station shutdown. It may be seen that the VLS battery energy storage power station is a typical CPS. Therefore, safe operation of an information system plays a crucial role in reliability of the VLS battery energy storage power station. Related technology is known from CN111008454A, 14 April, 2020.

**SUMMARY**

In view of this, embodiments of the application provide a method and apparatus for analyzing reliability of a CPS of a VLS battery energy storage power station, which solves a problem that due to large and complex topology of communication and monitoring systems of a current VLS battery energy storage power station, once a communication and monitoring device fails randomly, it may be difficult for a control center to obtain and process data, which greatly reduces operation efficiency thereof, and may even cause the danger of power station shutdown.

The present invention is defined in the appended independent claims.

An embodiment of the application provides a method for establishing a reliability model based on a CPS of an energy storage power station, a CPS of a VLS battery energy storage power station includes an information system, a physical system and a cyber-physical interface apparatus, and the method includes the following operations.

Information disturbance data is obtained based on a preset reliability model of the information system.

A failure rate and a repair rate of the cyber-physical interface apparatus are obtained based on a preset reliability model of the cyber-physical interface apparatus.

A reliability model of the CPS of the VLS battery energy storage power station is obtained based on a preset reliability model of the physical system, the information disturbance data and the failure rate and the repair rate of the cyber-physical interface apparatus.

A reliability index of the VLS battery energy storage power station is obtained based on the reliability model of the CPS of the VLS battery energy storage power station.

In an implementation, the method may include the following operations. The reliability model of the physical system is established, which includes the following operations. Parameters of a physical system of an energy storage sub-station are input, and a reliability model of an energy storage unit substring in the energy storage sub-station is established by adopting a method for modeling series-parallel elements.

In an implementation, the information disturbance data may include a total delay time, and the obtaining the information disturbance data based on the reliability model of the information system may include the following operations.

Parameters of the information system are input into the reliability model of the information system, and an adjacency matrix of a communication network is established by the reliability model of the information system.

A delay time is assigned to a weight of the adjacency matrix, and the delay time is allowed to obey a Pareto distribution, to calculate the total delay time.

In an implementation, the obtaining the failure rate and the repair rate of the cyber-physical interface apparatus based on the reliability model of the cyber-physical interface apparatus may include the following operations.

Availability of the cyber-physical interface apparatus is obtained according to information attack power obeying a Poisson distribution.

The failure rate and the repair rate of the cyber-physical interface apparatus are obtained based on the availability of the cyber-physical interface apparatus.

In an implementation, the method may further include the following operations. The reliability model of the CPS of the VLS battery energy storage power station is trained, which includes the following operations.

A preset number of sampling simulations are performed on the CPS of the VLS battery energy storage power station.

The reliability index of the VLS battery energy storage power station is calculated based on results of the sampling simulations.

The reliability model of the CPS of the VLS battery energy storage power station is trained based on the reliability index of the VLS battery energy storage power station.

In an implementation, the performing the preset number of sampling simulations on the CPS of the VLS battery energy storage power station may include the following operations. The sampling simulations are performed on a state of the CPS of the VLS battery energy storage power station, by adopting a non-sequential Monte Carlo method.

In an implementation, the reliability index of the VLS battery energy storage power station may include at least one of: expectation of available power of the energy storage power station, a probability of insufficient power of the energy storage power station, or expectation of insufficient electricity of the energy storage power station.

An apparatus for analyzing reliability of a CPS of a VLS battery energy storage power station, here the CPS of the VLS battery energy storage power station includes an information system, a physical system and a cyber-physical interface apparatus, and the apparatus includes an analysis module, a modeling module and a calculation module.

The analysis module is configured to obtain information disturbance data based on a preset reliability model of the information system, and obtain a failure rate and a repair rate of the cyber-physical interface apparatus based on a preset reliability model of the cyber-physical interface apparatus.

The modeling module is configured to obtain a reliability model of the CPS of the VLS battery energy storage power station based on a preset reliability model of the physical system, the information disturbance data and the failure rate and the repair rate of the cyber-physical interface apparatus.

The calculation module is configured to obtain a reliability index of the VLS battery energy storage power station based on the reliability model of the CPS of the VLS battery energy storage power station.

An electronic device, including a processor and a memory storing one or more computer instructions, here the one or more computer instructions implement the method for analyzing reliability of the CPS of the VLS battery energy storage power station of any one of the above, when the one or more computer instructions are executed by the processor.

A computer-readable storage medium, including a computer program stored therein, the computer program implementing the method for analyzing reliability of the CPS of the VLS battery energy storage power station of any one of the above, when the computer program is executed by a processor.

The method for establishing a reliability model based on a CPS of an energy storage power station provided by an embodiment of the application, may comprehensively quantify impact of external and internal information disturbance on the energy storage power station, by providing a reliability model of a CPS of a VLS battery energy storage power station, and improve reliability and economy of the energy storage power station, by redundant configuration of a cyber-physical device of the energy storage power station.

## BRIEF DESCRIPTION OF THE DRAWINGS

Here the accompanying drawings are incorporated in the description and constitute a part of the description, illustrate embodiments consistent with the application and are used, together with the description, to explain principles of the application.

FIG. 1 shows a flowchart of a method for analyzing reliability of a CPS of a VLS battery energy storage power station provided by an embodiment of the application.
FIG. 2 shows a flowchart based on analysis of reliability of a CPS of a VLS battery energy storage power station provided by an embodiment of the application.
FIG. 3 shows a model diagram of a CPS of a VLS battery energy storage power station provided by an embodiment of the application.
FIG. 4 shows a schematic structural diagram of primary and secondary systems of an energy storage sub-station provided by an embodiment of the application.
FIG. 5A shows a schematic diagram of transition of multiple states of an energy storage sub-station provided by an embodiment of the application.
FIG. 5B shows a schematic diagram of transition of two states of an energy storage sub-station provided by an embodiment of the application.
FIG. 6 shows a flowchart of availability of a cyber-physical interface apparatus provided by an embodiment of the application.
FIG. 7 shows a schematic structural diagram of an apparatus for analyzing reliability of a CPS of a VLS battery energy storage power station provided by an embodiment of the application.

## DETAILED DESCRIPTION

Technical solutions in the embodiments of the application will be described clearly and completely below with reference to the accompanying drawings in the embodiments of the application. It is apparent that the described embodiments are only a part of the embodiments of the application, rather than all of the embodiments of the application. Based on the embodiments in the application, all other embodiments obtained by those ordinary skilled in the art without paying any creative work fall within the scope of protection of the application.

## First Embodiment

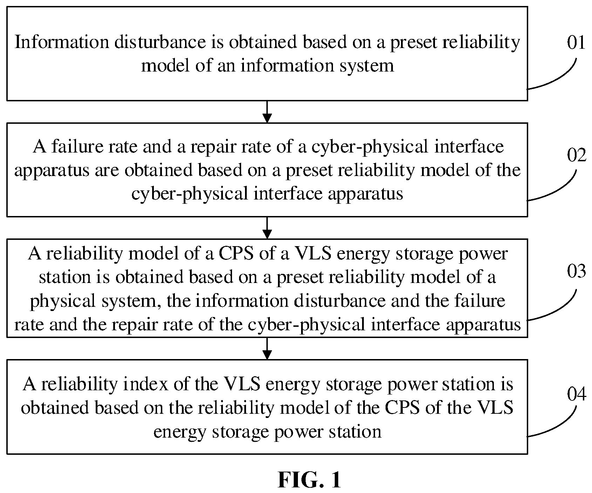

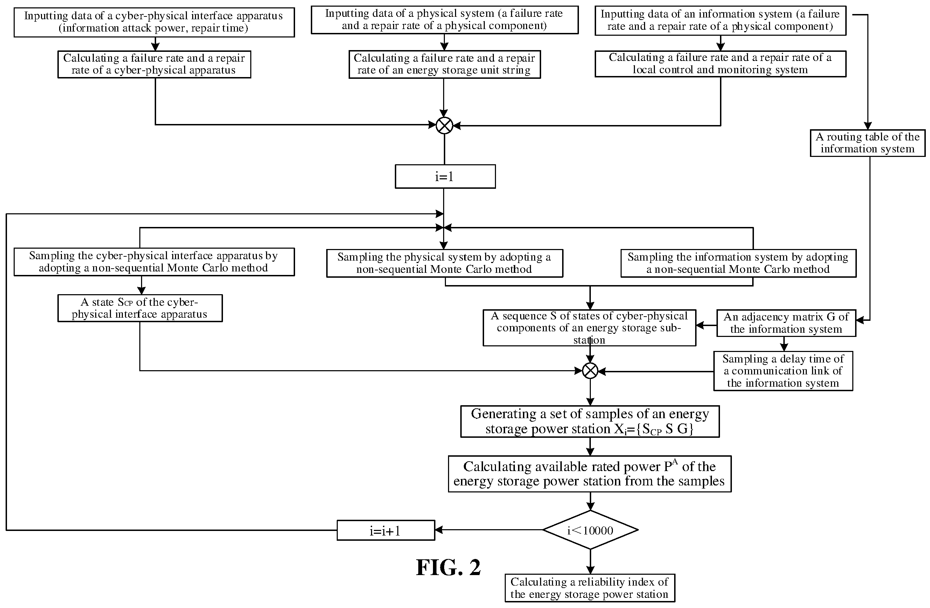

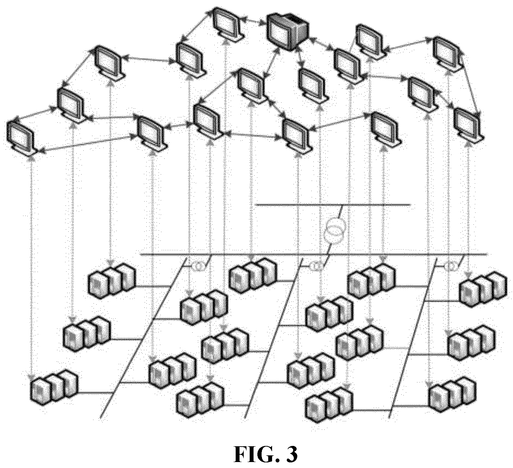

FIG. 1 shows a flowchart of a method for analyzing reliability of a CPS of a VLS battery energy storage power station provided by an embodiment of the application. FIG. 2 shows a flowchart based on analysis of reliability of a CPS of a VLS battery energy storage power station provided by an embodiment of the application. FIG. 3 shows a model diagram of a CPS of a VLS battery energy storage power station provided by an embodiment of the application.

As shown with reference to FIGS. 1-3, the embodiment provides a method for analyzing reliability of a CPS of a VLS battery energy storage power station. The method is based on the CPS of the VLS battery energy storage power station, and the CPS of the VLS battery energy storage power station is divided into an information system and a physical system. The physical system includes multiple energy storage sub-stations which are connected by incoming cables and mainly intended to complete charging/discharging requirements according to scheduling instructions, and the information system includes local control and monitoring systems (communication nodes) corresponding to the energy storage sub-stations one-to-one, which communicate through optical fibers and are mainly intended to upload data of the energy storage sub-stations and download control instructions.

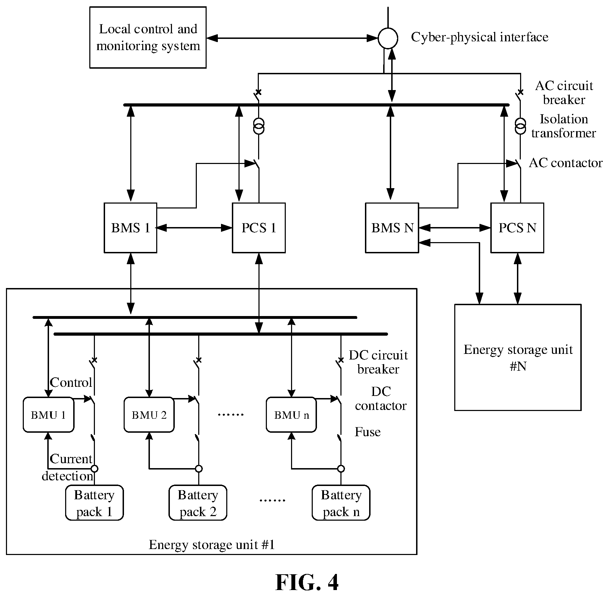

As shown in FIG. 4, primary and secondary systems of an energy storage sub-station include N energy storage unit strings, here an energy storage unit string includes an energy storage unit (each energy storage unit includes n battery packs and a battery management unit), an alternator, a battery management system and a cyber-physical interface apparatus. The battery management system collects battery state information from the battery management unit, and the battery management system and the alternator communicate with the local control and monitoring system through a cyber-physical interface. The method for analyzing reliability of the CPS of the VLS battery energy storage power station includes the following operations 01-04.

In operation 01, information disturbance data is obtained based on a preset reliability model of the information system. Here the information disturbance data may include a total delay time, and the obtaining the information disturbance data based on the preset reliability model of the information system may include the following operations. Parameters of the information system are input into the reliability model of the information system, and an adjacency matrix of a communication network is established by the reliability model of the information system. A delay time is assigned to a weight of the adjacency matrix, and the delay time is allowed to obey a Pareto distribution, to calculate the total delay time.

Failure of the communication node changes topology of the communication network, and the local control and monitoring system may not be able to communicate with a scheduling center. Both communication delay caused by a high network load and an information error code caused by an external interference affect stable operation of the energy storage power station to a certain extent. In an actual optical fiber network for industry, an error rate may hardly exceed a threshold of the error rate. Therefore, reliability of the communication link and impact of the delay time are mainly studied, the delay time is allowed to obey the Pareto distribution, and a total delay time from the local control and monitoring system to the scheduling center is calculated.

In an embodiment, modeling of the reliability of the communication network link is established. The information system of the energy storage power station includes M local control and monitoring systems and a scheduling center, and a structure of the communication network is abstracted into an undirected graph $G = \{V\ E\ A\}$, here a set of nodes $V = \{v_1\ v_2\ ...\ v_{M+1}\}$, $(v_i, v_j)$ constitutes a set E of edges, and an adjacency matrix $A = (a_{ij})_{(M+1) \times (M+1)}$ is used to record a delay time of an information communication link, which is specifically represented as follows:

$$a_{ij} = \begin{cases} W_{ij} & (v_i, v_j) \in E \\ W_i & i = j \\ 0 & (v_i, v_j) \notin E \end{cases}$$

here $W_{ij}$ is a delay time of a communication link between nodes $v_i$ and $v_j$, and obeys a normal distribution, and $W_i$ is available rated power and capacity of the energy storage sub-station.

According to an operation state of the local control and monitoring system (communication node), the communication network $G$ is updated by adopting a depth-first search algorithm. In general, there are more than one communication paths from the communication node to the scheduling center. Only when all the paths from the communication node to the scheduling center are interrupted, or a total delay time of an existing communication path exceeds a delay threshold, the communication node may not communicate with the scheduling center, which may be represented as follows:

$$R = R(L) \times R(T)$$

here $R(L)$ represents reliability of a communication path, and $R(T)$ represents reliability of a delay time.

$$R(L) = \begin{cases} 0 & \textit{failure} & \bigcup_{l=1}^{L}\left(\prod_{i \in l}S(n_i)S(f_i)=0\right) \\ 1 & \textit{normal} & \bigcup_{l=1}^{L}\left(\prod_{i \in l}S(n_i)S(f_i)=1\right) \end{cases}$$

here $L$ is a number of communication paths, and $S(n_i)$ and $S(f_i)$ are reliability of communication nodes and links on a communication path $l$.

$$R(T) = \begin{cases} 0 & \textit{failure} & \sum_{i,j \in l}W_{ij} > T_U \\ 1 & \textit{normal} & \sum_{i,j \in l}W_{ij} < T_U \end{cases}$$

here $T_U$ is an upper limit of delay on the communication path $l$.

In operation 02, a failure rate and a repair rate of the cyber-physical interface apparatus are obtained based on a preset reliability model of the cyber-physical interface apparatus. The obtaining the failure rate and the repair rate of the cyber-physical interface apparatus based on the reliability model of the cyber-physical interface apparatus may include the following operations. Information attack power is allowed to obey a Poisson distribution. Availability of the cyber-physical interface apparatus is obtained based on the information attack power. The failure rate and the repair rate of the cyber-physical interface apparatus are calculated. Information attack uses security loopholes of the CPS interface apparatus to make the apparatus unavailable. Therefore, the cyber-physical interface apparatus includes two operation states, i.e., a normal state and a failure state. Not all information attacks may cause the apparatus to fail, the information attack power is allowed to obey the Poisson distribution, to obtain the availability of the cyber-physical interface apparatus and calculate the failure rate and the repair rate thereof. Other non-power elements also include two operation states, i.e., a normal state and a failure state.

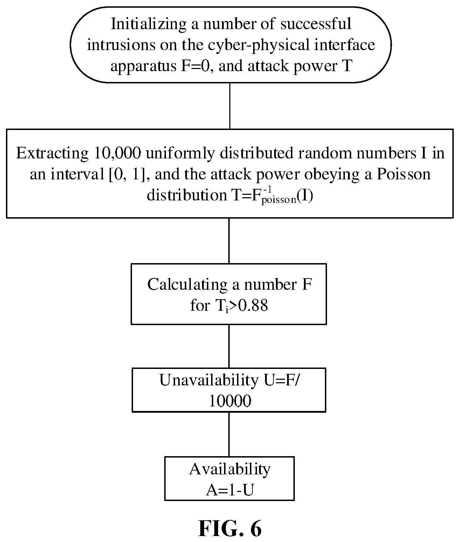

In an embodiment, a flowchart of calculation of the availability of the cyber-physical interface apparatus is shown in FIG. 6, and the failure rate and repair rate thereof may be calculated as follows:

$$\mu_{CP} = \frac{1}{MTTR}$$

$$\lambda_{CP} = \frac{8760 - 8760 \times A}{MTTR}$$

here $MTTR$ is an average repair time of the cyber-physical interface apparatus.

The cyber-physical interface apparatus has two operation states, i.e., a normal state and a failure state, and average unavailability rate thereof may be represented as:

$$FOR_{CP} = \frac{\lambda_{CP}}{\lambda_{CP} + \mu_{CP}}$$

A uniformly distributed random number $U_{CP}$ is extracted in an interval [0, 1], and an operation state thereof may be represented as:

$$S_{CP} = \begin{cases} 0 & \textit{normal} & FOR_{CP} < U_{CP} < 1 \\ 1 & \textit{failure} & 0 < U_{CP} < FOR_{CP} \end{cases}$$

In operation 03, a reliability model of the CPS of the VLS battery energy storage power station is obtained based on a preset reliability model of the physical system, the information disturbance data and the failure rate and the repair rate of the cyber-physical interface apparatus. Reliability of the physical system is modeled by a series-parallel system method for elements of the information system of the VLS battery energy storage power station, and the reliability model of the CPS of the VLS battery energy storage power station is established, by considering impact of the information attack on analysis of reliability of the cyber-physical interface apparatus and impact of information disturbance (transmission delay, error code, or the like) on safe and stable operation of the energy storage power station.

The method may further include the following operations. The reliability model of the physical system is established, which includes the following operations. Parameters of a physical system of an energy storage sub-station are input, and a reliability model of an energy storage unit substring in the energy storage sub-station is established by adopting a method for modeling series-parallel elements. The energy storage sub-station of the physical system includes N energy storage unit strings, and each energy storage unit string has two operation modes, i.e., a normal mode and a failure mode. Failure of a single energy storage unit string will not lead to failure of the entire energy storage sub-station. Therefore, an operation state of the energy storage sub-station may be divided into multiple states.

In an embodiment, a model of a series-parallel system in the physical system is calculated, assuming that a series system includes m elements, each element has a failure rate $\lambda_1$, $\lambda_2, \cdots, \lambda_m$ respectfully, and a repair rates $\mu_1$, $\mu_2, \cdots, \mu_m$ respectfully. The series system means that failure of any element in the system will lead to failure of the system. Reliability parameters of the system, such as a probability of repairing state $P_r$, a probability of failure state $P_f$, a failure rate $\lambda_{system}$ and a repair rate $\mu_{system}$, may be calculated as follows:

$$P_r = \frac{\mu_1}{\lambda_1 + \mu_1} \times \frac{\mu_2}{\lambda_2 + \mu_2} \times \cdots \times \frac{\mu_m}{\lambda_m + \mu_m}$$

$$P_f = 1 - P_r$$

$$\lambda_{system} = \lambda_1 + \lambda_2 + \cdots + \lambda_m$$

$$\mu_{system} = \lambda_{system} \times P_r \times \left(P_f\right)^{-1}$$

A parallel system means that failure of all elements in the system will lead to failure of the system, and reliability parameters thereof may be calculated as follows:

$$P_f = \frac{\lambda_1}{\lambda_1 + \mu_1} \times \frac{\lambda_2}{\lambda_2 + \mu_2} \times \cdots \times \frac{\lambda_m}{\lambda_m + \mu_m}$$

$$P_r = 1 - P_f$$

$$\mu_{system} = \mu_1 + \mu_2 + \cdots + \mu_m$$

$$\lambda_{system} = \mu_{system} \times P_f \times \left(P_r\right)^{-1}$$

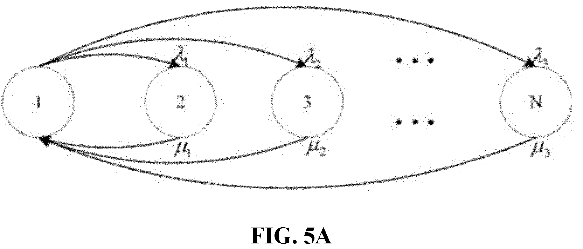

Further, the reliability model of the CPS of the VLS battery energy storage power station is established. A diagram of transition of multiple states of an energy storage sub-station is shown in FIG. 5A, a failure rate $\lambda_i$, a repair rate $\mu_i$ and a multi-state probability $P = (P_1, P_2, \cdots, P_N)$ thereof are calculated as follows:

$$\lambda_i = C_N^f \times \left(P_f\right)^f \times \left(P_r\right)^{N-f}$$

$$\mu_i = \prod_{i \in f} \mu$$

A state transition matrix of the energy storage sub-station is obtained by applying a Markov method to FIG. 5A:

$$T = \begin{bmatrix} 1 - \sum_{i=1}^{N} \lambda_i & \lambda_1 & \lambda_2 & \cdots & \lambda_N \\ \mu_1 & 1 - \mu_1 & 0 & \cdots & 0 \\ \mu_2 & 0 & 1 - \mu_2 & \cdots & 0 \\ \vdots & \vdots & \vdots & \cdots & \vdots \\ \mu_N & 0 & 0 & \cdots & 1 - \mu_N \end{bmatrix}$$

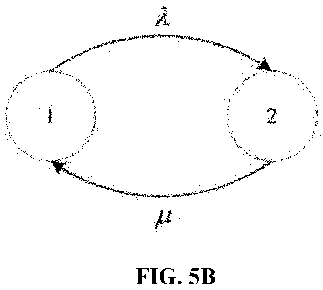

The energy storage sub-station of the physical system includes two energy storage unit strings, and each energy storage unit string has two operation modes, i.e., a normal mode and a failure mode. Failure of a single energy storage unit string will not lead to failure of the entire energy storage sub-station. Therefore, an operation state of the energy storage sub-station may be divided into multiple states. A diagram of transition of multiple states of an energy storage sub-station is shown in FIG. 5B, with a failure rate $\lambda$ and a repair rate $\mu$.

According to a Markov process approximation principle, a multi-state probability may be obtained by solving it:

$$PT = P$$

The VLS battery energy storage power station has a set of energy storage sub-stations S with M different operation states. A uniformly distributed random number $U_i$ is extracted in an interval [0, 1]. An operation state of an i-th energy storage sub-station $S_i$ may be represented as follows:

$$S = \begin{pmatrix} S_1 & S_2 & \cdots & S_M \end{pmatrix}$$

$$S_i = \begin{cases} 0\,(normal) & \sum_{n=2}^{N} P_n < U_i < 1 \\ 1\,(all\ failure) & \sum_{n=2}^{N-1} P_n < U_i < \sum_{n=2}^{N} P_n \\ 2\,(partial\ failure\ N\text{-}2) & \sum_{n=2}^{N-2} P_n < U_i < \sum_{n=2}^{N-1} P_n \\ \vdots & \\ N-1\,(partial\ failure\ 2) & P_2 < U_i < P_2 + P_3 \\ N\,(partial\ failure\ 1) & 0 < U_i < P_2 \end{cases}$$

In operation 04, a reliability index of the VLS battery energy storage power station is obtained based on the reliability model of the CPS of the VLS battery energy storage power station.

Here, data of the information system is input into the reliability model of the CPS of the VLS battery energy storage power station, to represent the reliability index quantitatively. In an embodiment, the reliability index of the VLS battery energy storage power station may include at least one of: expectation of available power of the energy storage power station, a probability of insufficient power of the energy storage power station, or expectation of insufficient electricity of the energy storage power station.

In an embodiment, the reliability index of the energy storage power station is calculated:

1. A probability of insufficient rated power, PIP, represents a probability of insufficient rated power when an element of the energy storage power station fails, and is calculated as follows:

$$PIP = \sum_{X \in \Omega} \frac{n(X)}{N}$$

here $X = \{S\ G\}$ is a sample of state information of elements of a CPS of the energy storage power station, $N$ is a number of sampling, and $\Omega$ is a set of samples of the energy storage power stations with insufficient rated power.

2. Expectation of available rated power, EAP, represents expectation of available rated power due to failure of an element of the energy storage power station, and is calculated as follows:

$$EAP = \frac{1}{N} \times \sum_{X \in \Omega} p_X^A$$

here $p_X^A$ is a value of available rated power of the energy storage power station in a sample state $X$.

3. Expectation of absence of rated power, EIP, represents expectation of absence of rated power due to failure of an element of the energy storage power station, and is calculated as follows:

$$EIP = \frac{1}{N} \times \sum_{X \in \Omega} p_X^U$$

here $p_X^U$ is a value of absence of rated power of the energy storage power station in a sample state $X$.

4. Expectation of insufficient capacity of the energy storage power station, EIC, represents expectation of electric energy wasted by a renewable energy due to failure of an internal element of the energy storage power station, and is calculated as follows:

$$EIC = \frac{1}{N} \times \sum_{X \in \Omega} p_X^U \times T$$

here $T$ is a duration of the system in a sample state $X$.

In addition to operations described in the above method, the method for establishing the reliability model of the CPS of the VLS battery energy storage power station may further include the following operations. The reliability model of the CPS of the VLS battery energy storage power station is trained, which includes the following operations. A preset number of sampling simulations are performed on the CPS. The reliability index of the energy storage power station is calculated based on results of the sampling simulations. The reliability model of the CPS of the VLS battery energy storage power station is trained based on the reliability index of the energy storage power station. In an embodiment, the performing the preset number of sampling simulations on the CPS may include the following operations. The sampling simulations are performed on a state of the CPS, by adopting a non-sequential Monte Carlo method. In an embodiment, the preset number may be 10,000. In addition, the preset number may be set according to actual conditions, and is not limited by the application. In an embodiment, the reliability index of the energy storage power station may include at least one of: expectation of available power of the energy storage power station, a probability of insufficient power of the energy storage power station, or expectation of insufficient electricity of the energy storage power station. In addition, the reliability index of the energy storage power station may also include other indices, of which specific contents are not limited by the application.

The method for analyzing reliability of a CPS of a VLS battery energy storage power station provided by the application, may comprehensively quantify impact of external and internal information disturbance on the energy storage power station, and improve reliability and economy of the energy storage power station, by redundant configuration of a cyber-physical device of the energy storage power station, which is of great significance to planning and construction of the VLS battery energy storage power station. The method models reliability of elements of the information system of the VLS battery energy storage power station by a series-parallel system method, and then represents the reliability index quantitatively, by considering impact of the information attack on analysis of reliability of the cyber-physical interface apparatus and impact of information disturbance (transmission delay, error code, or the like) on safe and stable operation of the energy storage power station. In addition, based on the method for analyzing reliability provided by the application, a cost of benefit of the energy storage power station may be increased to a certain extent.

**Second Embodiment**

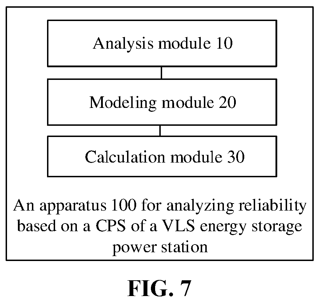

FIG. 7 shows a schematic structural diagram of an apparatus for analyzing reliability of a CPS of a VLS battery energy storage power station provided by an embodiment of the application.

Referring to FIG. 7, the embodiment provides an apparatus 100 for analyzing reliability of a CPS of a VLS battery energy storage power station, and the apparatus for analyzing reliability of the CPS of the VLS battery energy storage power station includes an analysis module 10, a modeling module 20 and a calculation module 30.

In an embodiment, the analysis module 10 is configured to obtain information disturbance based on a preset reliability model of an information system, and obtain a failure rate and a repair rate of a cyber-physical interface apparatus based on a preset reliability model of the cyber-physical interface apparatus.

The modeling module 20 is configured to obtain a reliability model of the CPS of the VLS battery energy storage power station based on a preset reliability model of a physical system, the information disturbance and the failure rate and the repair rate of the cyber-physical interface apparatus.

The calculation module 30 is configured to obtain a reliability index of the VLS battery energy storage power station based on the reliability model of the CPS of the VLS battery energy storage power station.

The analysis module 10 obtains the information disturbance based on the preset reliability model of the information system, and obtains the failure rate and the repair rate of the cyber-physical interface apparatus based on the preset reliability model of the cyber-physical interface apparatus. Then the modeling module 20 obtains the reliability model of the CPS of the VLS battery energy storage power station based on the preset reliability model of the physical system, the information disturbance and the failure rate and the repair rate of the cyber-physical interface apparatus. The calculation module 30 obtains the reliability index of the VLS battery energy storage power station based on the reliability model of the CPS of the VLS battery energy storage power station.

The apparatus for analyzing reliability based on a CPS of a VLS battery energy storage power station provided by the embodiment, may comprehensively quantify impact of external and internal information disturbance on the energy storage power station, and improve reliability and economy of the energy storage power station, by redundant configuration of a cyber-physical device of the energy storage power station, which is of great significance to planning and construction of the VLS battery energy storage power station. The apparatus mainly models reliability of the physical system, and then represents the reliability index quantitatively, by considering impact of the information attack on analysis of reliability of the cyber-physical interface apparatus and impact of information disturbance (transmission delay, error code, or the like) on safe and stable operation of the energy storage power station, and a cost of benefit of the energy storage power station may be increased to a certain extent.

### Third Embodiment

The embodiment provides an electronic device, which may include a processor and a memory storing a computer program, the computer program implements the method for analyzing reliability of the CPS of the VLS battery energy storage power station of the first embodiment, when the computer program is executed by the processor. It may be appreciated that the electronic device may also include input/output (I/O) interfaces and communication components.

Here the processor is configured to perform all or part of operations of the method for analyzing reliability of the CPS of the VLS battery energy storage power station of the first embodiment. The memory is configured to store various types of data, which may include, for example, instructions for any application or method in the electronic device, as well as application-related data.

The processor may be implemented by an Application Specific Integrated Circuit (abbreviated as ASIC), a Digital Signal Processor (abbreviated as DSP), a Programmable Logic Device (abbreviated as PLD), a Field Programmable Gate Array (abbreviated as FPGA), a controller, a microcontroller, a microprocessor or other electronic elements, to perform the method for analyzing reliability of the CPS of the VLS battery energy storage power station of the first embodiment.

The memory may be implemented by any type of volatile or non-volatile storage device or a combination thereof, such as a Static Random Access Memory (abbreviated as SRAM), an Electrically Erasable Programmable Read-Only Memory (abbreviated as EEPROM), an Erasable Programmable Read-Only Memory (abbreviated as EPROM), a Programmable Read-Only Memory (abbreviated as PROM), a Read-Only Memory (abbreviated as ROM), a magnetic memory, a flash memory, a magnetic disk or a compact disk (CD).

### Fourth Embodiment

The embodiment also provides a computer-readable storage medium. Each function unit in each embodiment of the application may be integrated into a processing unit, or each unit may exist physically alone, or two or more units may be integrated into a unit. The functions may be stored in a computer-readable storage medium, when they are implemented in a form of software function units and sold or used as independent products.

Based on such understanding, the technical solutions of the application substantially or parts making contributions to the related art or a part of the technical solutions may be embodied in a form of software product, and the computer software product is stored in a storage medium, including multiple instructions configured to enable a piece of computer device (which may be a personal computer, a server, a network device, or the like) to perform all or part of operations of the method in each embodiment of the application.

The aforementioned storage medium includes various media capable of storing program check codes, such as a flash memory, a hard disk, a multimedia card, a card-type memory (for example, a SD or DX memory, or the like), a Random Access Memory (RAM), a SRAM, a ROM, an EEPROM, a PROM, a magnetic memory, a magnetic disk, a CD, a server, an APP application mall, or the like, on which a computer program is stored, and when the computer program is executed by a processor, the computer program may implement the following method operations 01-04.

In operation 01, information disturbance is obtained based on a preset reliability model of an information system.

In operation 02, a failure rate and a repair rate of a cyber-physical interface apparatus are obtained based on a preset reliability model of the cyber-physical interface apparatus.

In operation 03, a reliability model of a CPS of a VLS battery energy storage power station is obtained based on a preset reliability model of a physical system, the information disturbance and the failure rate and the repair rate of the cyber-physical interface apparatus.

In operation 04, a reliability index of the VLS battery energy storage power station is obtained based on the reliability model of the CPS of the VLS battery energy storage power station.

For specific implementations and resulting effects, reference may be made to descriptions of the first embodiment, which will not be elaborated in the application.

It may be appreciated by those ordinary skilled in the art that units and algorithm operations of each example described in combination with the embodiments disclosed here may be implemented in electronic hardware, or a combination of computer software and electronic hardware. Whether these functions are performed in hardware or software, depends on specific application and design constraints of the technical solutions. Those skilled in the art may implement the described functions by using different methods for each specific application, however, such implementation should not be considered as being beyond the scope of the application. It may be clearly understood by those skilled in the art that for convenience and brevity of descriptions, specific working processes of the above-described systems, apparatuses and units may refer to corresponding processes in the aforementioned method embodiments, which will not be elaborated here.

**Claims**

1. A method for analyzing reliability of a cyber-physical system (CPS) of a very-large-scale (VLS) battery energy storage power station, the CPS of the VLS battery energy storage power station comprises an information system, a physical system and a cyber-physical interface apparatus, the method comprising;

   obtaining information disturbance data based on a preset reliability model of the information system (01), wherein the information system comprises a plurality of local control and monitoring systems and a scheduling center;
   obtaining a failure rate and a repair rate of the cyber-physical interface apparatus based on a preset reliability model of the cyber-physical interface apparatus (02);
obtaining a reliability model of the CPS of the VLS battery energy storage power station based on a preset reliability model of the physical system, the information disturbance data and the failure rate and the repair rate of the cyber-physical interface apparatus (03); and
obtaining a reliability index of the VLS battery energy storage power station based on the reliability model of the CPS of the VLS battery energy storage power station (04);
**characterised in that**
the information disturbance data comprises a total delay time, the total delay time indicates a total delay time of a communication path from one of the plurality of the local control and monitoring systems to the scheduling center, and the obtaining the information disturbance data based on the preset reliability model of the information system (01) comprises:

   inputting parameters of the information system into the reliability model of the information system, and establishing, by the reliability model of the information system, an adjacency matrix of a communication network, wherein the adjacency matrix is used to record a delay time of a communication link between two nodes in the information system; and
   assigning the delay time to a weight of the adjacency matrix, and allowing the delay time to obey a Pareto distribution, to calculate the total delay time.

2. The method for analyzing reliability of the CPS of the VLS battery energy storage power station of claim 1, comprising: establishing the reliability model of the physical system which comprises: inputting parameters of a physical system of an energy storage sub-station, and establishing, by adopting a method for modeling series-parallel elements, a reliability model of an energy storage unit substring in the energy storage sub-station.

3. The method for analyzing reliability of the CPS of the VLS battery energy storage power station of claim 1, wherein the obtaining the failure rate and the repair rate of the cyber-physical interface apparatus based on the preset reliability model of the cyber-physical interface apparatus (02) comprises:

   obtaining availability of the cyber-physical interface apparatus according to information attack power obeying a Poisson distribution; and
   obtaining the failure rate and the repair rate of the cyber-physical interface apparatus based on the availability of the cyber-physical interface apparatus.

4. The method for analyzing reliability of the CPS of the VLS battery energy storage power station of claim 1, further comprising: training the reliability model of the CPS of the VLS battery energy storage power station, which comprises:

performing a preset number of sampling simulations on the CPS of the VLS battery energy storage power station; calculating the reliability index of the VLS battery energy storage power station based on results of the sampling simulations; and training the reliability model of the CPS of the VLS battery energy storage power station based on the reliability index of the VLS battery energy storage power station.

5. The method for analyzing reliability of the CPS of the VLS battery energy storage power station of claim 4, wherein the performing the preset number of sampling simulations on the CPS of the VLS battery energy storage power station comprises: performing, by adopting a non-sequential Monte Carlo method, the sampling simulations on a state of the CPS of the VLS battery energy storage power station.

6. The method for analyzing reliability of the CPS of the VLS battery energy storage power station of claim 4, wherein the reliability index of the VLS battery energy storage power station comprises at least one of: expectation of available power of the energy storage power station, a probability of insufficient power of the energy storage power station, or expectation of insufficient electricity of the energy storage power station.

7. An apparatus (100) for analyzing reliability of a cyber-physical system (CPS) of a very-large-scale (VLS) battery energy storage power station, the CPS of the VLS battery energy storage power station comprises an information system, a physical system and a cyber-physical interface apparatus, the apparatus comprising:

an analysis module (10) configured to obtain information disturbance data based on a preset reliability model of the information system, wherein the information system comprises a plurality of local control and monitoring systems and a scheduling center; and obtain a failure rate and a repair rate of the cyber-physical interface apparatus based on a preset reliability model of the cyber-physical interface apparatus; a modeling module (20) configured to obtain a reliability model of the CPS of the VLS battery energy storage power station based on a preset reliability model of the physical system, the information disturbance data and the failure rate and the repair rate of the cyber-physical interface apparatus; and a calculation module (30) configured to obtain a reliability index of the VLS battery energy storage power station based on the reliability model of the CPS of the VLS battery energy storage power station **characterised in that** the information disturbance data comprises a total delay time, the total delay time indicates a total delay time of a communication path from one of the plurality of the local control and monitoring systems to the scheduling center, and the analysis module (10) is further configured to:

input parameters of the information system into the reliability model of the information system, and establish, by the reliability model of the information system, an adjacency matrix of a communication network, wherein the adjacency matrix is used to record a delay time of a communication link between two nodes in the information system; and assign the delay time to a weight of the adjacency matrix, and allow the delay time to obey a Pareto distribution, to calculate the total delay time.

8. An electronic device, **characterized in that** the electronic device comprises a processor and a memory storing one or more computer instructions, and the one or more computer instructions implement the method for analyzing reliability of the CPS of the VLS battery energy storage power station of any one of claims 1-6, when the one or more computer instructions are executed by the processor.

9. A computer-readable storage medium, **characterized in that** the computer-readable storage medium comprises a computer program stored therein, and the computer program implements the method for analyzing reliability of the CPS of the VLS battery energy storage power station of any one of claims 1-6, when the computer program is executed by a processor.

**Patentansprüche**

1. Verfahren zum Analysieren der Zuverlässigkeit eines cyber-physikalischen Systems (CPS) eines sehr großen (VLS) Batterieenergiespeicherkraftwerks, wobei das CPS des VLS-Batterieenergiespeicherkraftwerks ein Informationssystem, ein physikalisches System und eine cyber-physikalische Schnittstelleneinrichtung umfasst, wobei das Verfahren umfasst:

Ermitteln von Informationsstörungsdaten basierend auf einem voreingestellten Zuverlässigkeitsmodell des Informationssystems (01), wobei das Informationssystem eine Vielzahl von lokalen Steuerungs- und Überwachungssystemen und ein Planungszentrum umfasst;

Ermitteln einer Ausfallrate und einer Reparaturrate der cyber-physikalischen Schnittstelleneinrichtung basierend auf einem voreingestellten Zuverlässigkeitsmodell der cyber-physikalischen Schnittstelleneinrichtung (02);

Erhalten eines Zuverlässigkeitsmodells des CPS des VLS-Batterieenergiespeicherkraftwerks basierend auf einem voreingestellten Zuverlässigkeitsmodell des physikalischen Systems, den Informationsstörungsdaten und der Ausfallrate und der Reparaturrate der cyberphysikalischen Schnittstelleneinrichtung (03) und

Ermitteln eines Zuverlässigkeitsindex des VLS-Batterieenergiespeicherkraftwerks basierend auf dem Zuverlässigkeitsmodell des CPS des VLS-Batterieenergiespeicherkraftwerks (04); **dadurch gekennzeichnet, dass** die Informationsstörungsdaten eine Gesamtverzögerungszeit umfassen, die Gesamtverzögerungszeit eine Gesamtverzögerungszeit eines Kommunikationspfads von einem der Vielzahl der lokalen Steuerungs- und Überwachungssysteme zum Planungszentrum angibt und das Ermitteln der Informationsstörungsdaten basierend auf dem voreingestellten Zuverlässigkeitsmodell des Informationssystems (01) umfasst:

Eingeben von Parametern des Informationssystems in das Zuverlässigkeitsmodell des Informationssystems und Erstellen einer Adjazenzmatrix eines Kommunikationsnetzwerks durch das Zuverlässigkeitsmodell des Informationssystems, wobei die Adjazenzmatrix verwendet wird, um eine Verzögerungszeit einer Kommunikationsverbindung zwischen zwei Knoten im Informationssystem aufzuzeichnen; und Zuweisen der Verzögerungszeit zu einem Gewicht der Adjazenzmatrix und Zulassen, dass die Verzögerungszeit einer Pareto-Verteilung folgt, um die Gesamtverzögerungszeit zu berechnen.

2. Verfahren zum Analysieren der Zuverlässigkeit des CPS des VLS-Batterieenergiespeicherkraftwerks nach Anspruch 1, umfassend: Erstellen des Zuverlässigkeitsmodells des physikalischen Systems, was umfasst: Eingeben von Parametern eines physikalischen Systems einer Energiespeicherunterstation und Erstellen eines Zuverlässigkeitsmodells einer Energiespeichereinheit-Teilkette in der Energiespeicherunterstation durch Anwenden eines Verfahrens zum Modellieren von Reihen-Parallel-Elementen.

3. Verfahren zum Analysieren der Zuverlässigkeit des CPS des VLS-Batterieenergiespeicherkraftwerks nach Anspruch 1, wobei das Ermitteln der Ausfallrate und der Reparaturrate der cyber-physikalischen Schnittstelleneinrichtung basierend auf dem voreingestellten Zuverlässigkeitsmodell der cyber-physikalischen Schnittstelleneinrichtung (02) umfasst:

Ermitteln der Verfügbarkeit der cyber-physikalischen Schnittstelleneinrichtung entsprechend der Informationsangriffskraft, die einer Poisson-Verteilung folgt; und Ermitteln der Ausfallrate und der Reparaturrate der cyber-physikalischen Schnittstelleneinrichtung basierend auf der Verfügbarkeit der cyberphysikalischen Schnittstelleneinrichtung.

4. Verfahren zum Analysieren der Zuverlässigkeit des CPS des VLS-Batterieenergiespeicherkraftwerks nach Anspruch 1, ferner umfassend: Trainieren des Zuverlässigkeitsmodells des CPS des VLS-Batterieenergiespeicherkraftwerks, was umfasst:

Durchführen einer voreingestellten Anzahl von Abfragesimulationen an dem CPS des VLS-Batterieenergiespeicherkraftwerks; Berechnen des Zuverlässigkeitsindex des VLS-Batterieenergiespeicherkraftwerks basierend auf den Ergebnissen der Abfragesimulationen und Trainieren des Zuverlässigkeitsmodells des CPS des VLS-Batterieenergiespeicherkraftwerks basierend auf dem Zuverlässigkeitsindex des VLS-Batterieenergiespeicherkraftwerks.

5. Verfahren zum Analysieren der Zuverlässigkeit des CPS des VLS-Batterieenergiespeicherkraftwerks nach Anspruch 4, wobei das Durchführen der voreingestellten Anzahl von Abfragesimulationen an dem CPS des VLS-Batterieenergiespeicherkraftwerks umfasst: Durchführen der Abfragesimulationen an einem Zustand des CPS des VLS-Batterieenergiespeicherkraftwerks durch Anwenden eines nicht-sequentiellen Monte-Carlo-Verfahrens.

6. Verfahren zum Analysieren der Zuverlässigkeit des CPS des VLS-Batterieenergiespeicherkraftwerks nach Anspruch 4, wobei der Zuverlässigkeitsindex des VLS-Batterieenergiespeicherkraftwerks mindestens eines umfasst von:
Erwartung der verfügbaren Leistung des Energiespeicherkraftwerks, Wahrscheinlichkeit einer unzureichenden Leistung des Energiespeicherkraftwerks oder Erwartung einer unzureichenden Elektrizität des Energiespeicherkraftwerks.

7. Einrichtung (100) zum Analysieren der Zuverlässigkeit eines cyber-physikalischen Systems (CPS) eines sehr großen (VLS) Batterieenergiespeicherkraftwerks, wobei das CPS des VLS-Batterieenergiespeicherkraftwerks ein Informationssystem, ein physikalisches System und eine cyber-physikalische Schnittstelleneinrichtung umfasst, wobei die Einrichtung umfasst:

ein Analysemodul (10), das konfiguriert ist, um Informationsstörungsdaten basierend auf einem voreingestellten Zuverlässigkeitsmodell des Informationssystems zu ermitteln, wobei das Informationssystem eine Vielzahl von lokalen Steuerungs- und Überwachungssystemen und ein Planungszentrum umfasst; und eine Ausfallrate und eine Reparaturrate der cyber-physikalischen Schnittstelleneinrichtung basierend auf einem voreingestellten Zuverlässigkeitsmodell der cyber-physikalischen Schnittstelleneinrichtung zu ermitteln;
ein Modellierungsmodul (20), das konfiguriert ist, um ein Zuverlässigkeitsmodell des CPS des VLS-Batterieenergiespeicherkraftwerks basierend auf einem voreingestellten Zuverlässigkeitsmodell des physikalischen Systems, den Informationsstörungsdaten und der Ausfallrate und der Reparaturrate der cyber-physikalischen Schnittstellenvorrichtung zu ermitteln; und
ein Berechnungsmodul (30), das konfiguriert ist, um einen Zuverlässigkeitsindex des VLS-Batterieenergiespeicherkraftwerks basierend auf dem Zuverlässigkeitsmodell des CPS des VLS-Batterieenergiespeicherkraftwerks zu ermitteln,
**dadurch gekennzeichnet, dass**
die Informationsstörungsdaten eine Gesamtverzögerungszeit umfassen, die Gesamtverzögerungszeit eine Gesamtverzögerungszeit eines Kommunikationspfads von einem der Vielzahl der lokalen Steuerungs- und Überwachungssysteme zum Planungszentrum angibt, und das Analysemodul (10) ferner konfiguriert ist zum:

Eingeben von Parametern des Informationssystems in das Zuverlässigkeitsmodell des Informationssystems und Erstellen einer Adjazenzmatrix eines Kommunikationsnetzwerks durch das Zuverlässigkeitsmodell des Informationssystems, wobei die Adjazenzmatrix verwendet wird, um eine Verzögerungszeit einer Kommunikationsverbindung zwischen zwei Knoten im Informationssystem aufzuzeichnen; und
Zuweisen der Verzögerungszeit zu einem Gewicht der Adjazenzmatrix und Zulassen, dass die Verzögerungszeit einer Pareto-Verteilung folgt, um die Gesamtverzögerungszeit zu berechnen.

8. Elektronische Vorrichtung, **dadurch gekennzeichnet, dass** die elektronische Vorrichtung einen Prozessor und einen Speicher umfasst, der eine oder mehrere Computeranweisungen speichert, und die eine oder mehreren Computeranweisungen das Verfahren zum Analysieren der Zuverlässigkeit des CPS des VLS-Batterieenergiespeicherkraftwerks nach einem der Ansprüche 1 bis 6 implementieren, wenn die eine oder mehreren Computeranweisungen durch den Prozessor ausgeführt werden.

9. Computerlesbares Speichermedium, **dadurch gekennzeichnet, dass** das computerlesbare Speichermedium ein darin gespeichertes Computerprogramm umfasst und das Computerprogramm das Verfahren zum Analysieren der Zuverlässigkeit des CPS des VLS-Batterieenergiespeicherkraftwerks nach einem der Ansprüche 1 bis 6 implementiert, wenn das Computerprogramm durch einen Prozessor ausgeführt wird.

## Revendications

1. Procédé d'analyse de fiabilité d'un système cyber-physique (CPS) d'une centrale de stockage d'énergie à batterie à très grande échelle (VLS), le CPS de la centrale de stockage d'énergie à batterie VLS comprend un système d'informations, un système physique et un appareil d'interface cyber-physique, le procédé comprenant :

l'obtention de données de perturbation d'informations sur la base d'un modèle de fiabilité prédéfini du système d'informations (01), dans lequel le système d'informations comprend une pluralité de systèmes locaux de commande et de surveillance et un centre d'ordonnancement ;
l'obtention d'un taux de défaillance et d'un taux de réparation de l'appareil d'interface cyber-physique sur la base d'un modèle de fiabilité prédéfini de l'appareil d'interface cyber-physique (02) ;
l'obtention d'un modèle de fiabilité du CPS de la centrale de stockage d'énergie à batterie VLS sur la base d'un modèle de fiabilité prédéfini du système physique, des données de perturbation d'informations et du taux de défaillance et du taux de réparation de l'appareil d'interface cyber-physique (03) ; et

l'obtention d'un indice de fiabilité de la centrale de stockage d'énergie à batterie VLS sur la base du modèle de fiabilité du CPS de la centrale de stockage d'énergie à batterie VLS (04) ;

**caractérisé en ce que**

les données de perturbation d'informations comprennent un temps de retard total, le temps de retard total indique un temps de retard total d'une voie de communication à partir de l'un de la pluralité de systèmes locaux de commande et de surveillance vers le centre d'ordonnancement, et l'obtention des données de perturbation d'informations sur la base du modèle de fiabilité prédéfini du système d'informations (01) comprend :

l'introduction de paramètres du système d'informations dans le modèle de fiabilité du système d'informations, et l'établissement, par le modèle de fiabilité du système d'informations, d'une matrice d'adjacence d'un réseau de communication, dans lequel la matrice d'adjacence est utilisée pour enregistrer un temps de retard d'une liaison de communication entre deux nœuds du système d'informations ; et

l'affectation du temps de retard à un poids de la matrice d'adjacence, et le fait de permettre au temps de retard d'obéir à une distribution de Pareto, afin de calculer le temps de retard total.

2. Procédé d'analyse de fiabilité du CPS de la centrale de stockage d'énergie à batterie VLS selon la revendication 1, comprenant : l'établissement du modèle de fiabilité du système physique qui comprend : l'introduction de paramètres d'un système physique d'une sous-station de stockage d'énergie, et l'établissement, en adoptant un procédé de modélisation d'éléments en série-parallèle, d'un modèle de fiabilité d'une sous-chaîne d'unité de stockage d'énergie dans la sous-station de stockage d'énergie.

3. Procédé d'analyse de fiabilité du CPS de la centrale de stockage d'énergie à batterie VLS selon la revendication 1, dans lequel l'obtention du taux de défaillance et du taux de réparation de l'appareil d'interface cyber-physique sur la base du modèle de fiabilité prédéfini de l'appareil d'interface cyber-physique (02) comprend :

l'obtention d'une disponibilité de l'appareil d'interface cyber-physique en fonction d'une puissance d'attaque d'informations qui obéit à une distribution de Poisson ; et

l'obtention du taux de défaillance et du taux de réparation de l'appareil d'interface cyber-physique en fonction de la disponibilité de l'appareil d'interface cyber-physique.

4. Procédé d'analyse de fiabilité du CPS de la centrale de stockage d'énergie à batterie VLS selon la revendication 1, comprenant en outre : l'entraînement du modèle de fiabilité du CPS de la centrale de stockage d'énergie à batterie VLS, qui comprend :

la réalisation d'un nombre prédéfini de simulations d'échantillonnage sur le CPS de la centrale de stockage d'énergie à batterie VLS ;

le calcul de l'indice de fiabilité de la centrale de stockage d'énergie à batterie VLS sur la base de résultats des simulations d'échantillonnage ; et

la formation du modèle de fiabilité du CPS de la centrale de stockage d'énergie à batterie VLS sur la base de l'indice de fiabilité de la centrale de stockage d'énergie à batterie VLS.

5. Procédé d'analyse de fiabilité du CPS de la centrale de stockage d'énergie à batterie VLS selon la revendication 4, dans lequel la réalisation du nombre prédéfini de simulations d'échantillonnage sur le CPS de la centrale de stockage d'énergie à batterie VLS comprend : la réalisation, en adoptant un procédé Monte Carlo non séquentiel, des simulations d'échantillonnage sur un état du CPS de la centrale de stockage d'énergie à batterie VLS.

6. Procédé d'analyse de fiabilité du CPS de la centrale de stockage d'énergie à batterie VLS selon la revendication 4, dans lequel l'indice de fiabilité de la centrale de stockage d'énergie à batterie VLS comprend au moins l'un parmi : une espérance de puissance disponible de la centrale de stockage d'énergie, une probabilité de puissance insuffisante de la centrale de stockage d'énergie, ou une espérance d'électricité insuffisante de la centrale de stockage d'énergie.

7. Appareil (100) d'analyse de fiabilité d'un système cyber-physique (CPS) d'une centrale de stockage d'énergie à batterie à très grande échelle (VLS), le CPS de la centrale de stockage d'énergie à batterie VLS comprend un système d'informations, un système physique et un appareil d'interface cyber-physique, l'appareil comprenant :

un module d'analyse (10) configuré pour obtenir des données de perturbation d'informations sur la base d'un modèle de fiabilité prédéfini du système d'informations, dans lequel le système d'informations comprend une pluralité de systèmes locaux de commande et de surveillance et un centre d'ordonnancement ; et pour obtenir un taux de défaillance et un taux de réparation de l'appareil d'interface cyber-physique sur la base d'un modèle de fiabilité prédéfini de l'appareil d'interface cyber-physique ;

un module de modélisation (20) configuré pour obtenir un modèle de fiabilité du CPS de la centrale de stockage d'énergie à batterie VLS sur la base d'un modèle de fiabilité prédéfini du système physique, des données de perturbation d'informations et du taux de défaillance et du taux de réparation de l'appareil d'interface cyber-physique ; et

un module de calcul (30) configuré pour obtenir un indice de fiabilité de la centrale de stockage d'énergie à batterie VLS sur la base du modèle de fiabilité du CPS de la centrale de stockage d'énergie à batterie VLS ;

**caractérisé en ce que**

les données de perturbation d'informations comprennent un temps de retard total, le temps de retard total indique un temps de retard total d'une voie de communication à partir de l'un de la pluralité de systèmes locaux de commande et de surveillance vers le centre d'ordonnancement, et le module d'analyse (10) est en outre configuré pour :

introduire des paramètres du système d'informations dans le modèle de fiabilité du système d'informations, et établir, par le modèle de fiabilité du système d'informations, d'une matrice d'adjacence d'un réseau de communication, dans lequel la matrice d'adjacence est utilisée pour enregistrer un temps de retard d'une liaison de communication entre deux nœuds du système d'informations ; et

affecter le temps de retard à un poids de la matrice d'adjacence, et permettre au temps de retard d'obéir à une distribution de Pareto, afin de calculer le temps de retard total.

8. Dispositif électronique, **caractérisé en ce que** le dispositif électronique comprend un processeur et une mémoire stockant une ou plusieurs instructions informatiques, et la ou les instructions informatiques mettent en œuvre le procédé d'analyse de fiabilité du CPS de la centrale de stockage d'énergie à batterie VLS selon l'une quelconque des revendications 1 à 6, lorsque la ou les instructions informatiques sont exécutées par le processeur.

9. Support de stockage lisible par ordinateur, **caractérisé en ce que** le support de stockage lisible par ordinateur comprend un programme informatique stocké dans celui-ci, et le programme informatique met en œuvre le procédé d'analyse de fiabilité du CPS de la centrale de stockage d'énergie à batterie VLS selon l'une quelconque des revendications 1 à 6, lorsque le programme informatique est exécuté par un processeur.

Information disturbance is obtained based on a preset reliability model of an information system

01

A failure rate and a repair rate of a cyber-physical interface apparatus are obtained based on a preset reliability model of the cyber-physical interface apparatus

02

A reliability model of a CPS of a VLS energy storage power station is obtained based on a preset reliability model of a physical system, the information disturbance and the failure rate and the repair rate of the cyber-physical interface apparatus

03

A reliability index of the VLS energy storage power station is obtained based on the reliability model of the CPS of the VLS energy storage power station

04

**FIG. 1**

Inputting data of a cyber-physical interface apparatus (information attack power, repair time)

Inputting data of a physical system (a failure rate and a repair rate of a physical component)

Inputting data of an information system (a failure rate and a repair rate of a physical component)

Calculating a failure rate and a repair rate of a cyber-physical apparatus

Calculating a failure rate and a repair rate of an energy storage unit string

Calculating a failure rate and a repair rate of a local control and monitoring system

A routing table of the information system

$i=1$

Sampling the cyber-physical interface apparatus by adopting a non-sequential Monte Carlo method

Sampling the physical system by adopting a non-sequential Monte Carlo method

Sampling the information system by adopting a non-sequential Monte Carlo method

A state $S_{CP}$ of the cyber-physical interface apparatus

A sequence S of states of cyber-physical components of an energy storage sub-station

An adjacency matrix G of the information system

Sampling a delay time of a communication link of the information system

Generating a set of samples of an energy storage power station $X_i=\{S_{CP}\ S\ G\}$

Calculating available rated power $P^A$ of the energy storage power station from the samples

$i=i+1$

$i<10000$

Calculating a reliability index of the energy storage power station

**FIG. 2**

**FIG. 3**

**FIG. 4**

**FIG. 5A**

**FIG. 5B**

Initializing a number of successful
intrusions on the cyber-physical interface
apparatus F=0, and attack power T

Extracting 10,000 uniformly distributed random numbers I in
an interval [0, 1], and the attack power obeying a Poisson
distribution $T=F_{poisson}^{-1}(I)$

Calculating a number F
for $T_i>0.88$

Unavailability U=F/
10000

Availability
A=1-U

**FIG. 6**

Analysis module 10

Modeling module 20

Calculation module 30

An apparatus 100 for analyzing reliability based on a CPS of a VLS energy storage power station

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110230263

- CN 111008454 A